# EUROPEAN PATENT SPECIFICATION

(11) **EP 2 718 471 B1**
(45) Date of publication and mention of the grant of the patent: **19.12.2018**
(21) Application number: 12731731.1
(22) Date of filing: 08.06.2012
(51) Int. Cl.: C22B 3/00, C22B 34/14, C22B 34/24

(54) **METHOD FOR THE SELECTIVE SEPARATION AND RECOVERY OF METAL SOLUTES FROM SOLUTION**
VERFAHREN ZUR SELEKTIVEN ABSCHEIDUNG UND WIEDERGEWINNUNG VON GELÖSTEN METALLSTOFFEN AUS EINER LÖSUNG
PROCÉDÉ POUR LA SÉPARATION ET LA RÉCUPÉRATION SÉLECTIVES DE SOLUTÉS DE MÉTAL À PARTIR D'UNE SOLUTION

(30) Priority: 08.06.2011 ZA 201008828
(43) Date of publication of application: 16.04.2014
(73) Proprietor: North-West University, 2531 Potchefstroom (ZA)
(72) Inventor: VAN DER WESTHUIZEN, Derik Jacobus, 2531 Potchefstroom (ZA); LACHMANN, Gerhard, 2531 Potchefstroom (ZA); KRIEG, Henning Manfred, 2531 Potchefstroom (ZA)
(74) Representative: Michalski Hüttermann & Partner Patentanwälte mbB
(86) International application number: PCT/IB2012/052907
(87) International publication number: WO 2012/168915

(56) References cited:
- US-B2- 6 521 117
- W.S. WINSTON HO: "Removal and Recovery of Metals and Other Materials by Supported Liquid Memebranes with Strip Dispersion", ANN. N.Y. ACAD. SCI., no. 984, 2003, pages 97-122, XP002682547, New York
- SONAWANE ET AL: "Au(I) extraction by LIX-79/n-heptane using the pseudo-emulsion-based hollow-fiber strip dispersion (PEHFSD) technique", JOURNAL OF MEMBRANE SCIENCE, ELSEVIER SCIENTIFIC PUBL.COMPANY. AMSTERDAM, NL, vol. 300, no. 1-2, 15 August 2007 (2007-08-15), pages 147-155, XP022206266, ISSN: 0376-7388, DOI: 10.1016/J.MEMSCI.2007.05.016
- J. M. WIENCEK AND S.-Y. HU: "Emulsion Liquid Membrane Extraction in a Hollow-Fiber Contactor", CHEM. ENG. TECHNOL., vol. 23, no. 6, 2000, pages 551-553, XP002682548, WILEY-VCH
- KLAASSEN ET AL: "Membrane Contactors in Industrial Applications", CHEMICAL ENGINEERING RESEARCH AND DESIGN, PART A, INSTITUTION OF CHEMICAL ENGINEERS, XX, vol. 83, no. 3, 1 March 2005 (2005-03-01), pages 234-246, XP022536322, ISSN: 0263-8762, DOI: 10.1205/CHERD.04196

## Description

### Technical Field

The present invention relates to a method for the selective separation and recovery of metal solutes from an acidic aqueous solution by solvent extraction techniques. The present invention further relates to the selective separation and recovery of hafnium and zirconium metal solutes; of niobium and tantalum metal solutes; and of the platinum group metal (hereinafter referred to as "PGM") solutes from solution by the use of membrane based solvent extraction, in particular by pertraction and emulsified pertraction.

### Background to the Invention

Membrane based solvent extraction (hereinafter referred to as "MBSX") is a combined process of solvent extraction performed in membrane contactors. Membrane contactors are devices that can be used in various solvent extraction applications and allow two liquid phases to come into direct contact with each other, for the purpose of mass transfer between the two liquid phases, without dispersing one phase into the other.

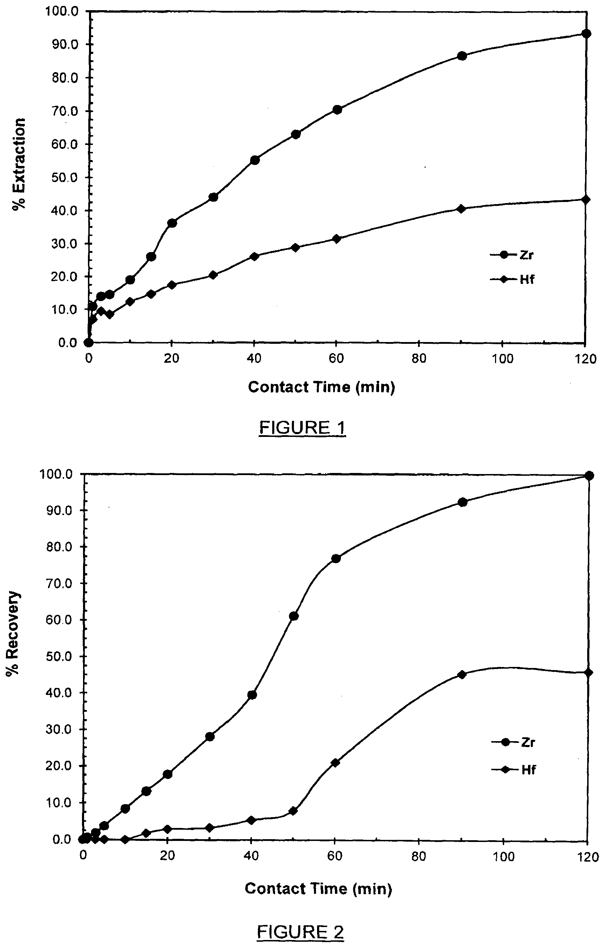

The four different configurations for MBSX are illustrated in Figure 1 herein below.

In the supported liquid membrane (SLM) configuration, as illustrated in the work of Yang *et al.* (Yang, X.J., Fane, A.G. and Pin, C. Separation of zirconium and hafnium using hollow fibers Part 1. Supported liquid membranes, Chemical Engineering Journal, Vol 88, (2002) 37 - 44), the organic extractant is located inside the wall of the porous hydrophobic hollow fiber membrane. The two aqueous streams, being the feed and the stripping liquor, are on the lumen and the shell side of the membrane. The allurement of SLM is in the fact that the loading and the stripping occur in one step. In case the feed contains particulate matter, the feed is usually entered at the shell side. The main reason why the SLM method is not applied in an industrial setting is due to a stability problem that is always present.

In the pertraction configuration, this is not the case. If, in case of a shock wave, the fiber pores are filled with the aqueous phase, this will be replaced automatically with organic solvent from the lumen side. The main disadvantage of pertraction compared to the SLM method is that two pertraction membranes are required: one for loading the organic phase and the other for stripping the metal back into the aqueous phase.

This problem can be avoided by using emulsified pertraction (EP). Now the lumen side of the fiber is fed with a water-in-oil (W/O) emulsion. The "oil" in this emulsion is the solvent and the water droplets are the stripping liquor. The metal is transferred from the aqueous phase at the shell side through the organic extractant in the fiber pores, via the continuous organic phase to the water droplets in the emulsion. Subsequently, the emulsion has to be segregated in order to recover the metal in the aqueous solution and the organic solvent for recycling into the process. This technology has been proven, for instance in the upgrading of pickle baths in the galvanic industry. Slight overpressure at the shell side can be used to limit solvent loss in the raffinate at the shell side.

Hydrometallurgical treatment of metal-bearing materials, such as metal ores, metal-bearing concentrates, and other metal-bearing substances, has been well established for many years. Moreover, leaching of metal-bearing materials is a fundamental process utilized to extract metals from metal-bearing materials.

In general, the first step in this process entails contacting the metal-bearing material with an aqueous solution containing a leaching agent or agents which extracts the metal or metals from the metal-bearing material into solution.

The aqueous leach solution (aqueous leachate) containing the leached metal can then be treated via solvent extraction wherein the aqueous leachate is contacted with an organic solution comprising a metal-specific extraction reagent (or stripping liquor). The metal-specific extraction reagent extracts the metal from the aqueous phase into the organic phase. The metal depleted aqueous phase, or the raffinate, may be recycled back to the leaching process for further use or may be discharged.

Under conventional leaching and solvent extraction processes, large concentrations of soluble metal and metal precipitate can be lost in the metal-depleted, acid containing aqueous phase raffinate solutions. These losses lead to inefficiencies and low overall process yields. Additionally, these high metal concentrations in the raffinate make recovery of secondary metals costly and, in some instances, possibly impractical.

A flow diagram depicting the use of MBSX in a hydrometallurgical cycle is depicted in Figure IV.

In hydrometallurgical industries, the removal of dissolved metals (metal solutes) from an aqueous stream is accomplished by passing an aqueous feed phase, containing the metal solutes, and an organic solvent (or water-in-oil (W/O) emulsion) on opposite sides of a micro-porous hydrophobic membrane. Since the micro-porous membrane is hydrophobic, the membrane will not allow the aqueous feed phase to pass through the pores into the W/O emulsion side of the membrane. The membrane essentially acts as a support between the aqueous feed phase and the W/O emulsion allowing the two fluids to interface at the pore. Thus, by careful control of the pressure difference between the fluids, one of the fluids is immobilized in the pores of the membrane such that the fluid/fluid interface is located at the mouth of each pore. This allows for mass diffusion of the metal solutes to take place from the aqueous feed phase to the W/O emulsion.

Zirconium is highly desirable as a cladding material for nuclear fuel rods in nuclear power plants because of its very low nuclear cross-section for thermal neutrons. However, in order to use Zr in nuclear reactors it must be essentially Hf free (< 100 ppm Hf) due to the fact that Hf has an absorption cross-section 600 times larger than Zr for thermal neutrons and thus has different nuclear properties. Hf coexists with Zr in nature and has very similar chemical properties to that of Zr, which complicates the separation of the two elements.

The most efficient conventional technology for the separation of Zr and Hf, and the various PGM's, is by using solvent-extraction employing mixer-settlers where an organic solvent containing the extractant is contacted with an acidic aqueous solution containing the metal solutes. The one phase is then dispersed within the second phase and mass transfer occurs by diffusion. However, the dispersion of the one phase within the other often leads to technical and economical problems including, *inter alia,* undesirable emulsification, third phase formation, and in the case where flow rates differ too drastically, unloading or flooding of the contactor occurs.

In the work of Bringas *et al.* (Bringas, E.. Fresnanedo San Roma'n, A. and Ortiz, I. Separation and Recovery of Anionic Pollutants by the Emulsion Pertraction Technology. Remediation of Polluted Groundwaters with Cr (VI), Industrial and Engineering Chemistry Research, Vol 45, (2006) 4295 - 4303), the selective removal and recovery of chromium (VI) from polluted ground waters where other competitive anionic species (mainly sulfate and chloride anions) are present, were studied by using the MBSX technology. The workers have stated that, by creating an emulsion of the organic solvent and the aqueous stripping liquor, simultaneous separation and recovery of the product could be obtained. With a starting Cr (VI) concentration of 8.84 mol/m³ in the feed phase, the Cr (VI) in the stripping phase could be concentrated to 281 mol/m³ within 1.3 h, reaching a concentration factor of 18 733 before depletion of the stripping agent. Good separation of the Cr (IV) from HSO₄⁻ and Cl⁻ was obtained.

Within the same research group, Mediaville *et al.* (Mediaville, R., Ortiz, I. and Urtiaga, A. Selective Extraction of Zinc and Iron from passivating baths. Desalination, Vol 250, (2010) 1014 - 1015) used MBSX to remove zinc and iron from chromium (III) passivating baths. Zinc metal (Zn = 7000 mg/L) was lowered to 2450 mg/L; iron metal (Fe = 30 mg/L) was lowered to 4 mg/L and chromium (Cr = 5 500 mg/L) was maintained approximately at the initial value. By creating an emulsion of the organic solvent and the aqueous stripping liquor prior to the extraction process, the MBSX process allowed for the simultaneous recovery of Zn in a concentrated stripping phase for further industrial use.

The foregoing approach of creating an emulsion of the organic solvent and the aqueous stripping liquor prior to the extraction process differs markedly from techniques employing mixer-settlers and thus offers a number of important advantages over such conventional dispersed phase contactors. These advantages include, *inter alia,* (i) the absence of undesirable emulsions which form when the extractant material and the feed aqueous solution are contacted together. This leads to poor phase separation thereby resulting in the presence of incorrect mass balances; (ii) flooding at high flow rates is avoided; (iii) unloading at low flow rates is prevented; (iv) density differences between fluids is no longer required; and (v) very high interfacial area is achieved.

In mixer-settlers, the surface/contact area formed on the surface of the water-in-oil or oil-in-water droplets varies considerably depending on numerous factors. In contrast to this, the available surface area that is created by the membrane pores in a membrane contactor remains the same. This is accordingly very advantageous when compared to the variable surface/contact areas which are created when techniques using mixer-settlers are employed. Furthermore, membrane contactors achieve low flow rates and higher efficiency with approximately 500 times larger contact area.

A further advantage that can be observed is that linear scale-up is achieved thereby allowing scale-up procedures to be convenient and straight forward across a range of various commercial available membrane contactors of different sizes varying from 100 L/h to 100 000L/h.

Taking the abovementioned teachings of Bringas *et al.* and Mediaville *et al.* into account, one could thus not presume *a priori* that the methods employed by Bringas *et al.* and Mediaville *et al.* would be operable with hafnium and zirconium. The reasoning thereof resides in the fact that both hafnium and zirconium possess inherently slow chemical kinetic properties in relation to Cr and Zn (Van der Westhuizen, D.J., Lachmann, G. and Bruinsma, O.S.L. Separation of zirconium and hafnium via solvent-extraction. M.Sc dissertation, North West University Potchefstroom Campus, June 2010, pp 55, 59). A method for metal recovery from aqueous solutions by means of a supported liquid membrane technology is known from US 6521117.

PGM's possess specific properties and have extensively been applied in many chemical industries for decades. These metals can serve as the core materials of many significant electronic products, as crucial components of fuel cells and as the key ingredients of chemical catalysts, used to remove automobile pollutants automatically. There is thus a great demand for these metals in various applications.

Although the chemical kinetic properties pertaining to the PGM's and also to Ta and Nb are higher than that of hafnium and zirconium, said kinetic properties are still significantly lower than that of Cr and Zn and thus a person skilled in the art would not expect to employ the teachings of Bringas *et al.* and Mediaville *et al.* for the selective separation and recovery of Ta, Nb and the PGM's.

To the Applicant's knowledge the use of MBSX, wherein an emulsion of organic solvent and aqueous stripping liquor is prepared prior to the extraction process, has never been employed for purposes of the selective separation and recovery of hafnium and zirconium metal solutes; of niobium and tantalum metal solutes; and of the platinum group metal solutes from solution.

Accordingly, there is a clear need in the art for an improved process for separating and recovering metals from aqueous solutions containing dissolved metals, in particular hafnium and zirconium; niobium and tantalum; and the platinum group metals, from an acidic aqueous solution, which process does not suffer from the shortcomings associated with the prior art separation methods.

For purposes of the present invention, the terms "lumen side" and "shell side" of a membrane contractor, as referred to herein, are clearly exemplified in the following diagram.

The foregoing has outlined some of the more pertinent objects of the present invention. These objects should be construed as being merely illustrative of some of the more prominent features and applications of the invention. Many other beneficial results can be obtained by applying the disclosed invention in a different manner or modifying the invention within the scope of the invention. Accordingly, other objects in a full understanding of the invention may be had by referring to the summary of the invention and the detailed description setting forth the preferred embodiments in addition to the scope of the invention defined by the claims taken in conjunction with the accompanying drawings.

### Summary of the invention

The invention is defined by the features of the independent claim. Preferred embodiments are defined by the features of the dependent claims.

According to a first aspect thereof, the present invention provides a method for the selective separation and recovery of two or more metal solutes selected from the group consisting of hafnium, zirconium, niobium, tantalum, palladium, platinum, rhodium, ruthenium, osmium and iridium, from an acidic aqueous solution, the method including the steps of:
a) providing an acidic aqueous solution, the acidic aqueous solution including a source of at least two metal solutes wherein the at least two metal solutes are selected from the group consisting of hafnium, zirconium, niobium, tantalum, palladium, platinum, rhodium, ruthenium, osmium and iridium;
b) contacting an organic medium with an aqueous stripping solution to form a water-in-oil emulsion;
c) introducing the water-in-oil emulsion to a lumen side of a hollow fiber membrane contactor;
d) introducing the acidic aqueous solution to a shell side of the hollow fiber membrane contactor;
e) allowing one or more metal solutes to be transferred from the acidic aqueous solution to the water-in-oil emulsion;
f) recovering a first metal solute from the water-in-oil emulsion;
g) repeating any one or more of the steps described herein above for the recovery of a second and/or further metal solute; and
h) repeating any one or more of the said steps where the purity of the first, second and/or further metal solute is desired to be improved.

According to a second aspect thereof, the present invention provides a method for the selective separation and recovery of two or more of hafnium and zirconium metal solutes from an acidic aqueous solution, the method including the steps of:
a) providing an acidic aqueous solution, the acidic aqueous solution including a source of at least two metal solutes wherein the at least two metal solutes are selected from the group consisting of hafnium and zirconium;
b) contacting an organic medium with an aqueous stripping solution to form a water-in-oil emulsion;
c) introducing the water-in-oil emulsion to a lumen side of a hollow fiber membrane contactor;
d) introducing the acidic aqueous solution to a shell side of the hollow fiber membrane contactor;
e) allowing one or more metal solutes to be transferred from the acidic aqueous solution to the water-in-oil emulsion;
f) recovering a first metal solute from the water-in-oil emulsion;
g) repeating any one or more of the steps described herein above for the recovery of a second and/or further metal solute; and
h) repeating any one or more of the said steps where the purity of the first, second and/or further metal solute is desired to be improved.

According to a third aspect thereof, the present invention provides a method for the selective separation and recovery of two or more of niobium and tantalum metal solutes from an acidic aqueous solution, the method including the steps of:
a) providing an acidic aqueous solution, the acidic aqueous solution including a source of at least two metal solutes wherein the at least two metal solutes are selected from the group consisting of niobium and tantalum;
b) contacting an organic medium with an aqueous stripping solution to form a water-in-oil emulsion;
c) introducing the water-in-oil emulsion to a lumen side of a hollow fiber membrane contactor;
d) introducing the acidic aqueous solution to a shell side of the hollow fiber membrane contactor;
e) allowing one or more metal solutes to be transferred from the acidic aqueous solution to the water-in-oil emulsion;
f) recovering a first metal solute from the water-in-oil emulsion;
g) repeating any one or more of the steps described herein above for the recovery of a second and/or further metal solute; and
h) repeating any one or more of the said steps where the purity of the first, second and/or further metal solute is desired to be improved.

According to a fourth aspect thereof, the present invention provides a method for the selective separation and recovery of at least two metal solutes, selected from the group consisting of palladium, platinum, rhodium, ruthenium, osmium and iridium metal solutes, from an acidic aqueous solution, the method including the steps of:
a) providing an acidic aqueous solution, the acidic aqueous solution including a source of at least two metal solutes wherein the at least two metal solutes are selected from the group consisting of palladium, platinum, rhodium, ruthenium, osmium and iridium;
b) contacting an organic medium with an aqueous stripping solution to form a water-in-oil emulsion;
c) introducing the water-in-oil emulsion to a lumen side of a hollow fiber membrane contactor;
d) introducing the acidic aqueous solution to a shell side of the hollow fiber membrane contactor;
e) allowing one or more metal solutes to be transferred from the acidic aqueous solution to the water-in-oil emulsion;
f) recovering a first metal solute from the water-in-oil emulsion;
g) repeating any one or more of the steps described herein above for the recovery of a second and/or further metal solute; and
h) repeating any one or more of the said steps where the purity of the first, second and/or further metal solute is desired to be improved.

The above four-mentioned aspects of the invention can be referred to as emulsified pertraction.

According to a fifth aspect thereof, the present invention provides a method for the selective separation and recovery of two or more metal solutes selected from the group consisting of hafnium, zirconium, niobium, tantalum, palladium, platinum, rhodium, ruthenium, osmium and iridium, from an acidic aqueous solution, the method including the steps of:
a) providing an acidic aqueous solution, the acidic aqueous solution including a source of at least two metal solutes wherein the at least two metal solutes are selected from the group consisting of hafnium, zirconium, niobium, tantalum, palladium, platinum, rhodium, ruthenium, osmium and iridium;
b) introducing an organic medium to a lumen side of a first hollow fiber membrane contactor;
c) introducing the acidic aqueous solution to a shell side of the first hollow fiber membrane contactor;
d) allowing one or more metal solutes to be transferred from the acidic aqueous solution to the organic medium;
e) introducing the organic medium to a lumen side of a second hollow fiber membrane contactor;
f) introducing an aqueous stripping solution to a shell side of the second hollow fiber membrane contactor;
g) allowing one or more metal solutes to be transferred from the organic medium to the aqueous stripping solution;
h) recovering a first metal solute from the aqueous stripping solution;
i) repeating any one or more of the steps described herein above for the recovery of a second and/or further metal solute; and
j) optionally, repeating any one or more of the said steps where the purity of the first, second and/or further metal solute is desired to be improved.

According to a sixth aspect thereof, the present invention provides a method for the selective separation and recovery of hafnium and zirconium metal solutes from an acidic aqueous solution, the method including the steps of:
a) providing an acidic aqueous solution, the acidic aqueous solution including a source of at least two metal solutes wherein the at least two metal solutes are selected from the group consisting of hafnium and zirconium;
b) introducing an organic medium to a lumen side of a first hollow fiber membrane contactor;
c) introducing the acidic aqueous solution to a shell side of the first hollow fiber membrane contactor;
d) allowing one or more metal solutes to be transferred from the acidic aqueous solution to the organic medium;
e) introducing the organic medium to a lumen side of a second hollow fiber membrane contactor;
f) introducing an aqueous stripping solution to a shell side of the second hollow fiber membrane contactor;
g) allowing one or more metal solutes to be transferred from the organic medium to the aqueous stripping solution;
h) recovering a first metal solute from the aqueous stripping solution;
i) optionally, repeating any one or more of the steps described herein above where the recovery of a second and/or further metal solute is required; and
j) optionally, repeating any one or more of the said steps where the purity of the first, second and/or further metal solute is desired to be improved.

According to a seventh aspect thereof, the present invention provides a method for the selective separation and recovery of niobium and tantalum metal solutes from an acidic aqueous solution, the method including the steps of:
a) providing an acidic aqueous solution, the acidic aqueous solution including a source of at least two metal solutes wherein the at least two metal solutes are selected from the group consisting of niobium and tantalum:
b) introducing an organic medium to a lumen side of a first hollow fiber membrane contactor;
c) introducing the acidic aqueous solution to a shell side of the first hollow fiber membrane contactor;
d) allowing one or more metal solutes to be transferred from the acidic aqueous solution to the organic medium;
e) introducing the organic medium to a lumen side of a second hollow fiber membrane contactor;
f) introducing an aqueous stripping solution to a shell side of the second hollow fiber membrane contactor;
g) allowing one or more metal solutes to be transferred from the organic medium to the aqueous stripping solution;
h) recovering a first metal solute from the aqueous stripping solution;
i) optionally, repeating any one or more of the steps described herein above where the recovery of a second and/or further metal solute is required; and
j) optionally, repeating any one or more of the said steps where the purity of the first, second and/or further metal solute is desired to be improved.

According to an eight aspect thereof, the present invention provides a method for the selective separation and recovery of at least two metal solutes, selected from the group consisting of palladium, platinum, rhodium, ruthenium, osmium and iridium metal solutes, from an acidic aqueous solution, the method including the steps of:
a) providing an acidic aqueous solution, the acidic aqueous solution including a source of at least two metal solutes wherein the at least two metal solutes are selected from the group consisting of palladium, platinum, rhodium, ruthenium, osmium and iridium;
b) introducing an organic medium to a lumen side of a first hollow fiber membrane contactor;
c) introducing the acidic aqueous solution to a shell side of the first hollow fiber membrane contactor;
d) allowing one or more metal solutes to be transferred from the acidic aqueous solution to the organic medium;
e) introducing the organic medium to a lumen side of a second hollow fiber membrane contactor;
f) introducing an aqueous stripping solution to a shell side of the second hollow fiber membrane contactor;
g) allowing one or more metal solutes to be transferred from the organic medium to the aqueous stripping solution;
h) recovering a first metal solute from the aqueous stripping solution;
i) optionally, repeating any one or more of the steps described herein above where the recovery of a second and/or further metal solute is required; and
j) optionally, repeating any one or more of the said steps where the purity of the first, second and/or further metal solute is desired to be improved.

The above four-mentioned aspects of the invention can be referred to as pertraction.

In an embodiment of the present invention, the source of hafnium and zirconium metal solutes may be selected from the group consisting of zirconium tetrachloride (Zr(Hf)Cl₄), zirconyl octahydrate (Zr(Hf)OCl₂·8H₂O) and zirconium fluoride (Zr(Hf)F₄). It will be appreciated that the present invention is not limited to the aforesaid and accordingly any suitable source of hafnium and zirconium metal solutes may be employed herein.

In accordance with another embodiment, the invention provides for the source of niobium and tantalum metal solutes to be selected from the group consisting of tantalum pentoxide (Ta₂(Nb₂)O₅), tantalum chloride (Ta(Nb)Cl₅), tantalumfluoride (Ta(Nb)F₅), ammonium hexafluorotantalate (NH₄Ta(Nb)F₆) and potassium heptafluorotantalate (K₂Ta(Nb)F₇). The aforementioned metal solutes are presented herein as non-limiting examples thereof and accordingly it is to be appreciated that the present invention is not limited hereto.

In a further embodiment thereof, the invention provides for various non-limiting examples pertaining to the source of platinum, palladium, rhodium, ruthenium, osmium and iridium metal solutes. Such non-limiting examples may include sodium hexachloroplatinate (Na₂PtCl₆), palladium chloride (PdCl₂), rhodium chloride (RhCl₃), ruthenium chloride (RuCl₃), osmium trichloride (OsCl₃), and iridium chloride (IrCl₃), respectively.

The acidic aqueous solution may include any suitable acid, such as, but not limited to, hydrochloric acid (HCl), nitric acid (HNO₂), sulphuric acid (H₂SO₄), hydrofluoric acid (HF) and hydrogen perchlorate (HClO₄). The aforementioned acids are preferably provided in deionised water (H₂O). It will, however, be appreciated that the acidic aqueous solution need not be limited to an aqueous solution and may in fact be any suitable fluid solution that is immiscible with the organic medium.

It will be appreciated that the concentration of the foregoing metal solutes in the acidic aqueous solution may vary and thus, for purposes of the present invention, the concentration thereof is not specifically limited to any specific concentration.

The organic medium includes a metal selective organic extractant and a hydrocarbon diluent. The extractant forms a chemical compound (complex) with the metal solute thereby rendering the metal solute soluble in the organic medium.

Non-limiting examples of the metal selective organic extractant include tri-octylamine chloride (Alamine 336), methyl tricapryl ammonium chloride (Aliquat 336), 2-hydroxy-5-nonylacetophenoneoxime (LIX 84-IC), bis-(2,4,4-trimethylpentyl) (Cyanex 272), di-ethyl-hexyl phosphoric acid (D2EHPA), 444-trifluoro-1-(2-thienyl)-1,3-butanedione (TTA), methyl isobutyl ketone (MIBK), tributyl phosphate (TBP), butyl sulfoxide (BTSO) and diisooctylphosphonic acid (H₂A₂).

Non-limiting examples of the hydrocarbon diluent include cyclohexane (C₆H₁₂), m-Xylene (C₈H₁₀), toluene (C₇H₈) and a combustible hydrocarbon liquid (such as kerosene).

It will be appreciated that a modifier, such as any suitable alcohol, for instance 1-octanol, can be included in the organic medium.

In one embodiment of the present invention and where the metal solutes to be separated and recovered include hafnium and zirconium, the organic medium includes a combination of H₂A₂, cyclohexane and 1-octanol.

In a further embodiment of the present invention and where the metal solutes to be separated and recovered include niobium and tantalum, the organic medium includes a combination of H₂A₂, cyclohexane and 1-octanol.

In a yet further embodiment of the present invention and where the metal solutes to be separated and recovered include a combination of two or more of palladium, platinum, rhodium, ruthenium, osmium and iridium, the organic medium includes a combination of Alamine 336, cyclohexane and 1-octanol.

As mentioned herein before, the water-in-oil emulsion is formed by contacting the organic medium (which includes the metal selective organic extractant, the hydrocarbon diluent, and optionally, the modifier) with the aqueous stripping solution.

In one embodiment of the present invention, the aqueous stripping solution may be a diluted hydrochloric acid solution, a diluted sulphuric acid solution, a hydrogen chloride (HCl) / thiourea aqueous solution (SC(NH₂)₂), an ammonia chloride/ammonium mixture solution (NH₄Cl/NH₄OH), a sodium carbonate solution (Na₂CO₂) or an ammonium carbonate ((NH₄)₂CO₃) solution.

The invention provides for a recycle step to be possibly included with any of the steps (a) to (h) (or (a) to (j), as the case may be) described herein before for purposes of recycling the resulting stripped organic medium and/or the resulting metal depleted aqueous phase (raffinate) for re-use.

It will be appreciated by the skilled artesian that any suitable hollow fiber membrane contactor of the type and design known and described in the art may be employed herein. Preferably, the hollow fiber membrane contactor is designed for concentration-driven mass transfer.

In an embodiment thereof, the present invention provides for the hollow fiber membrane contactor design to be tubular. Alternatively, the contactor design may comprise a flat sheet design.

In another embodiment of the invention, the hollow fiber membrane contactor material may be hydrophobic. In terms of an alternative embodiment, the contactor material may be hydrophilic.

It will be appreciated that the parameters and conditions employed when using the hollow fiber membrane contactor depend on variables such as the metal solute(s) sought to be separated and recovered and/or the type of membrane contactor employed. Accordingly, the parameters and conditions discussed herein below may be adjusted and varied in order to produce optimized separation and recovery of the abovementioned metal solutes and thus are not limited to the parameters and conditions set forth below.

In one embodiment of the present invention, the membrane pore size is between 0.01 to 0.1 µm.

In terms of a further embodiment, the absolute pressure applied to the membrane contactor is between 0.2 to 1.5 bar. The pressure gradient across the membrane contactor may also be between 0.2 to 1.5 bar.

The flow rate of the acidic aqueous solution may be between 0.1 and 15 L/min.

The flow rate of the water-in-oil emulsion may be between 0.1 and 15 L/min.

According to a preferred embodiment thereof, the invention provides for the hollow fiber membrane contactor to be a Liqui-Cel® Extra-Flow membrane contactor as manufactured by Celgard, LLC.

The Inventors of the present invention have surprisingly and unexpectedly found that transfer of the aforementioned metal solutes from the acidic aqueous solution to the water-in-oil emulsion (or to the aqueous stripping solution, as the case may be) takes place despite these metal solutes' inherent slow chemical kinetic properties.

Moreover, the Inventors have surprisingly found that the concentration of metal solutes recovered from the method of the instant invention is markedly high resulting in a significant reduction in the amount of soluble metal and metal precipitate that is ordinarily lost in the raffinate. Accordingly, the overall process yields of the method of the instant invention are significantly high.

According to a further aspect thereof, the present invention provides for the use of the method of the instant invention, substantially as described herein, for the selective separation and recovery of hafnium and/or zirconium solutes from an acidic aqueous solution.

According to a yet further aspect thereof, the present invention provides for the use of the method of the instant invention, substantially as described herein, for the selective separation and recovery of niobium and/or tantalum solutes from an acidic aqueous solution.

According to a still further aspect thereof, the present invention provides for the use of the method of the instant invention, substantially as described herein, for the selective separation and recovery of at least two metal solutes, selected from the group consisting of palladium, platinum, rhodium, ruthenium, osmium and iridium, from an acidic aqueous solution.

According to a further feature thereof, the present invention provides for hafnium and/or zirconium solutes recovered by the method of the present invention, substantially as described herein.

According to a yet further feature thereof, the present invention provides for niobium and/or tantalum solutes recovered by the method of the present invention, substantially as described herein.

According to a still further feature thereof, the present invention provides for at least two metal solutes, selected from the group consisting of palladium, platinum, rhodium, ruthenium, osmium and iridium, recovered by the method of the present invention, substantially as described herein.

The foregoing and other objects, features and advantages of the present invention will become more apparent from the following description of certain embodiments of the present invention by way of the following examples.

### Brief Description of the Drawings

A more complete understanding of the present invention may best be obtained by referring to the detailed description when considered in connection with the drawing figures, wherein:
- Figure 1: is a graph depicting the concentration changes observed during the extraction of zirconium and hafnium in accordance with Example 1 of the present invention;
- Figure 2: is a graph illustrating the concentration changes observed during the recovery of zirconium and hafnium in accordance with Example 1 of the present invention;
- Figure 3: is a graph illustrating the concentration changes which take place in the aqueous feed phase, the organic phase and the aqueous stripping phase for zirconium in accordance with Example 1 of the present invention;
- Figure 4: is a graph illustrating the concentration changes which take place in the aqueous feed phase, the organic phase and the aqueous stripping phase for hafnium in accordance with Example 1 of the present invention;
- Figure 5: is a graph depicting the concentration changes observed during the extraction of tantalum and niobium in accordance with Example 2 of the present invention;
- Figure 6: is a graph illustrating the concentration changes which take place in the aqueous feed phase and the organic phase for tantalum in accordance with Example 2 of the present invention;
- Figure 7: is a graph illustrating the concentration changes which take place in the aqueous feed phase and the organic phase for niobium in accordance with Example 2 of the present invention;
- Figure 8: is a graph depicting the concentration changes observed during the extraction of platinum, palladium and rhodium in accordance with Example 3 of the present invention;
- Figure 9: is a graph depicting the concentration changes observed during the recovery of platinum, palladium and rhodium in accordance with Example 3 of the present invention;
- Figure 10: are graphs illustrating the concentration changes which take place in the aqueous feed phase, the organic phase and the aqueous stripping phase for platinum in accordance with Example 3 of the present invention;
- Figure 11: are graphs illustrating the concentration changes which take place in the aqueous feed phase, the organic phase and the aqueous stripping phase for palladium in accordance with Example 3 of the present invention; and
- Figure 12: are graphs illustrating the concentration changes which take place in the aqueous feed phase, the organic phase and the aqueous stripping phase for rhodium in accordance with Example 3 of the present invention.

### Detailed Description of the Invention

The invention will now be described with reference to the following non-limiting examples.

For purposes of the present examples, the Liqui-Cel® Extra-Flow membrane contactor manufactured by Celgard, LLC was employed.

### Example 1: Separation of zirconium and hafnium using emulsified pertraction

An acidic aqueous solution containing zirconium and hafnium solutes (Zr(Hf)OCl₂·8H₂O in 2 mol/L HNO₃) was fed to the shell side of a hollow fiber membrane contactor, as is indicated in the process flow diagram represented in Diagram 1 below.

An organic medium comprising 34.2 x 10⁻³ mol/L H₂A₂, 3% v/v 1-octanol and cyclohexane was contacted with 0.7 mol/L H₂SO₄ to form a water-in-oil (W/O) emulsion which was fed to the lumen side of the hollow fiber membrane contactor.

A pressure of 0.7 bar was applied to the shell side of the membrane contactor and a pressure of 0.4 bar was applied to the lumen side resulting in the transfer of the Zr and Hf solutes by diffusion from the acidic aqueous feed solution to the water-in-oil (W/O) emulsion. The flow rate was maintained at 2.12 L/min at both the shell and lumen sides of the membrane contactor.

Subsequently, the resulting stripped organic medium and the resulting metal depleted aqueous phase (raffinate) was recycled for re-use.

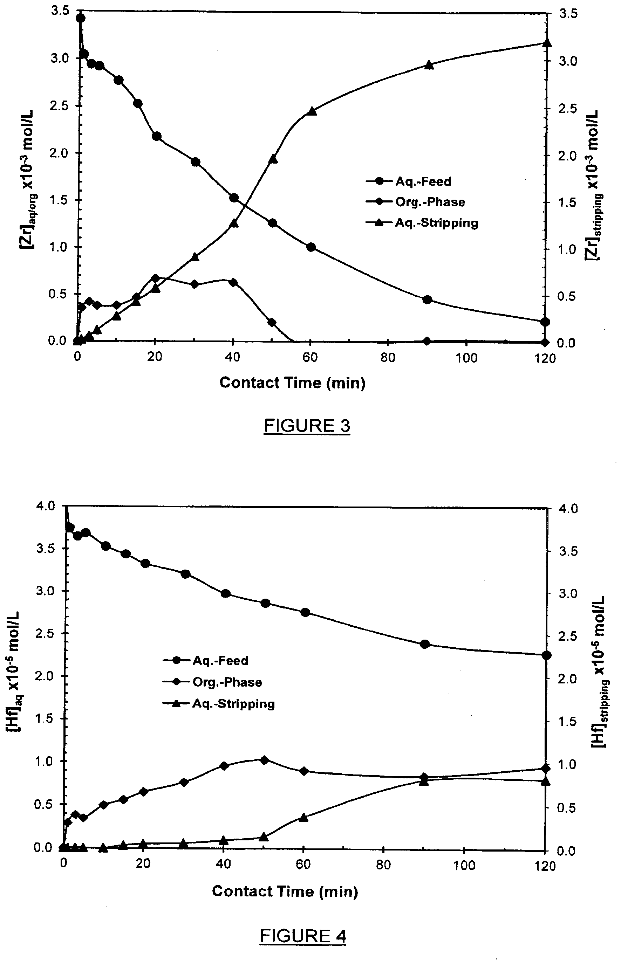

Experimental data pertaining to a single MBSX run for 120 minutes is provided in Figures 1, 2, 3 and 4. The concentration changes observed during the extraction of zirconium and hafnium and during the recovery of zirconium and hafnium are presented in Figures 1 and 2, respectively. Figures 3 and 4 present the concentration changes which take place in the aqueous and organic phases for zirconium and hafnium, respectively.

An observation of the graphs illustrated in the Figures reveals that, as expected, the extraction (as depicted in Figure 1) increased with time for both Zr and Hf, where Zr was extracted preferentially to Hf. After 120 minutes, approximately 90% of Zr was extracted compared to 40% of Hf.

During the simultaneous recovery shown in Figure 2, Zr was again preferentially back-extracted into the aqueous droplets of the emulsion, resulting in the full recovery of Zr with only 40% for Hf after 120 minutes.

During the emulsified pertraction, the Zr concentration decreased in the aqueous feed-phase (as shown in Figure 3) as the metal solutes were transferred to the organic phase as shown by the initial Zr concentration that increased in the organic phase. However, due to the simultaneous back-extraction from the organic phase to the aqueous stripping phase, the latter existing as water droplets in the W/O emulsion, the Zr concentration reached a plateau after 20 minutes of contact before declining due to an increase in the back-extraction, as confirmed by the increase in the Zr concentration in the aqueous stripping phase.

Similarly to the Zr extraction, the Hf concentration in the aqueous feed solution (as shown in Figure 4) decreased with a simultaneous increase in Hf concentration in the aqueous stripping phase, while the Hf concentration in the aqueous feed solution reached an equilibrium after 50 minutes, remaining constant thereafter. The observed difference of the Zr and Hf concentration in Figures 3 and 4 illustrates the degree of separation shown in Figures 1 and 2.

### Example 2: Separation of tantalum and niobium using pertraction

A acidic leach liquor containing niobium and tantalum solutes (NH₄Ta(Nb)F₆ in 4.0 mol/L H₂SO₄) was fed to the shell side of a hollow fiber membrane contactor, as is indicated in the process flow diagram represented in Diagram 2 below.

An organic medium comprising 81.45 x 10⁻⁴ mol/L H₂A₂, 3% v/v 1-octanol and cyclohexane was fed to the lumen side of the hollow fiber membrane contactor.

A pressure of 0.7 bar was applied to the shell side of the membrane contactor and a pressure of 0.4 bar was applied to the lumen side resulting in the transfer of the Ta and Nb solutes by diffusion from the acidic aqueous feed solution to the organic medium. The flow rate was maintained at 2.12 L/min at both the shell and lumen sides of the membrane contactor.

Subsequently, the resulting organic medium and the resulting metal depleted aqueous phase (raffinate) was recycled for re-use.

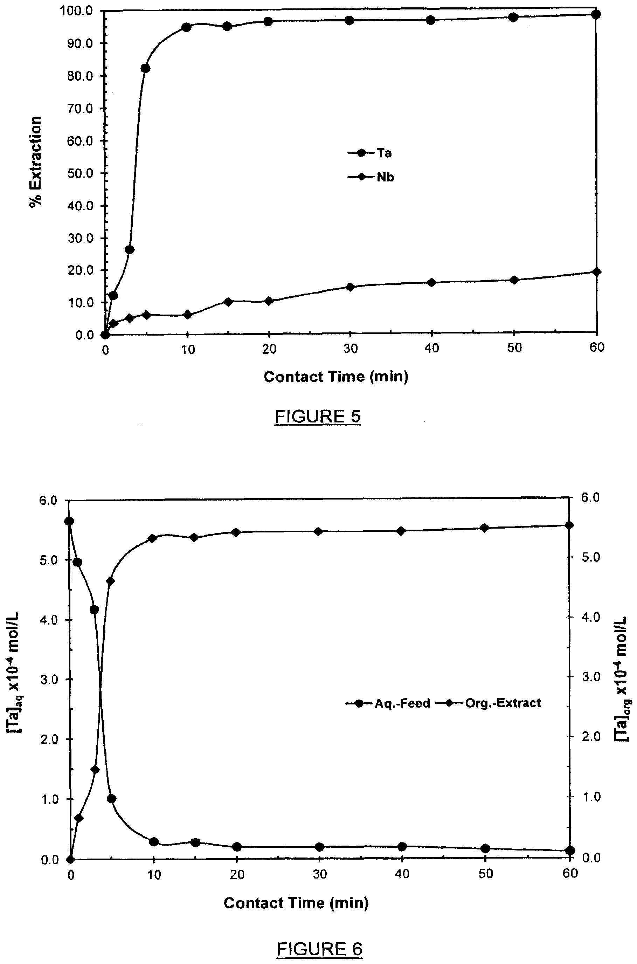

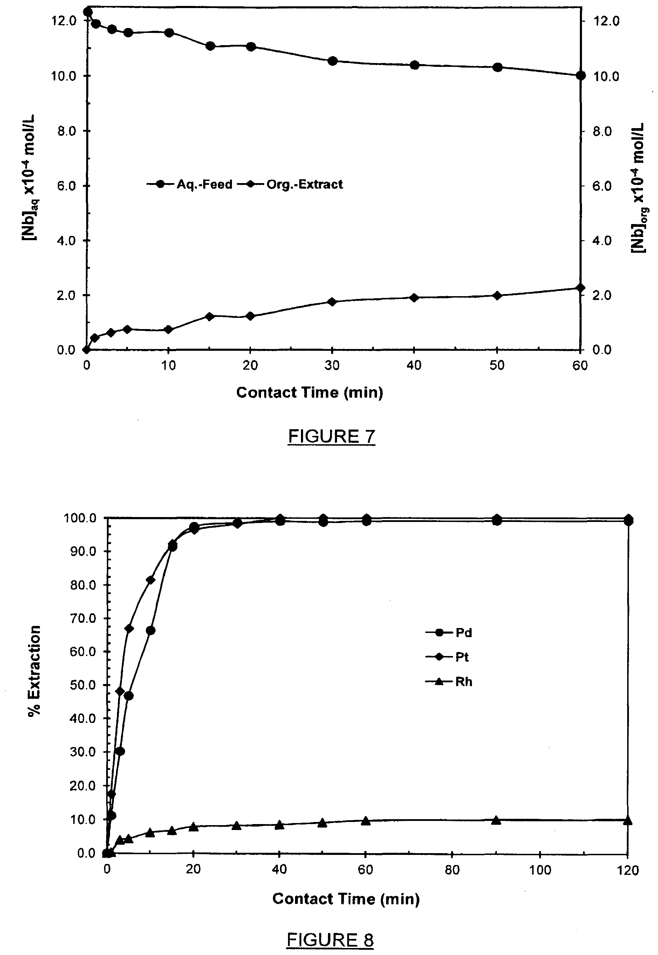

Experimental data pertaining to a single MBSX run for 60 minutes is provided in Figures 5, 6 and 7. The concentration changes observed during the extraction of tantalum and niobium are presented in Figure 5. Figures 6 and 7 present the concentration changes which took place in the aqueous and organic phases for tantalum and niobium, respectively.

An observation of the graphs illustrated in the Figures reveals that the extraction for Ta (as shown in Figure 5) increased with time, where Ta was extracted preferentially to Nb. After 60 minutes, approximately 99% of Ta was extracted compared to 19% of Nb.

During pertraction, as depicted in Figure 6, the Ta concentration decreased in the aqueous feed-phase as the metal solutes were transferred to the organic phase as shown by the initial Ta concentration which increased in the organic phase, whereby most of the metal solutes were transferred within the first 10 minutes.

As shown in Figure 7, the Nb concentration in the aqueous feed solution decreased slightly with a corresponding increase in the Nb concentration in the organic phase as the metal solutes were transferred.

The observed difference of the Ta and Nb concentration, depicted in Figures 6 and 7, illustrates the degree of separation shown in Figure 5.

As indicated in Diagram 2, the Inventors did not exceed in the back-extraction of the Ta species, and therefore, it is proposed that an alternative technique should be used for recovering the Ta from the organic phase for further use. This, however, is not due to the method according to the present invention but rather due to an insufficient stripping liquor.

### Example 3: Separation of platinum, palladium and rhodium using pertraction

A leachate containing platinum, palladium and rhodium solutes (Na₂PtCl₆, PdCl₂ and RhCl₃ in 1.0 mol/L HCl) was fed to the shell side of a hollow fiber membrane contactor, as is indicated in the process flow diagram represented in Diagram 3A below.

An organic medium comprising 0.1mol/L Alamine 336, 3% v/v 1-octanol and cyclohexane was fed to the lumen side of the hollow fiber membrane contactor.

A pressure of 0.7 bar was applied to the shell side of the membrane contactor and a pressure of 0.4 bar was applied to the lumen side resulting in the transfer of the Pt, Pd and Rh solutes by diffusion from the acidic aqueous feed solution to the organic medium. The flow rate was maintained at 2.12 L/min at both the shell and lumen sides of the membrane contactor.

The organic medium was thereafter fed to the lumen side of a second membrane contactor as is shown in the process flow diagram represented in Diagram 3B below.

As is shown further in Diagram 3B, an aqueous stripping solution comprising 0.5 mol/L HCI and 0.1 mol/L SC(NH₂)₂ was fed to the shell side of the second hollow fiber membrane contactor.

A pressure of 0.7 bar was applied to the shell side of the membrane contactor and a pressure of 0.4 bar was applied to the lumen side resulting in the transfer of the Pt, Pd and Rh solutes by diffusion from the organic medium to the aqueous stripping solution. The flow rate was maintained at 2.12 L/min at both the shell and lumen sides of the membrane contactor.

Subsequently the resulting stripped organic medium and the resulting metal depleted aqueous phase (raffinate) was recycled for re-use.

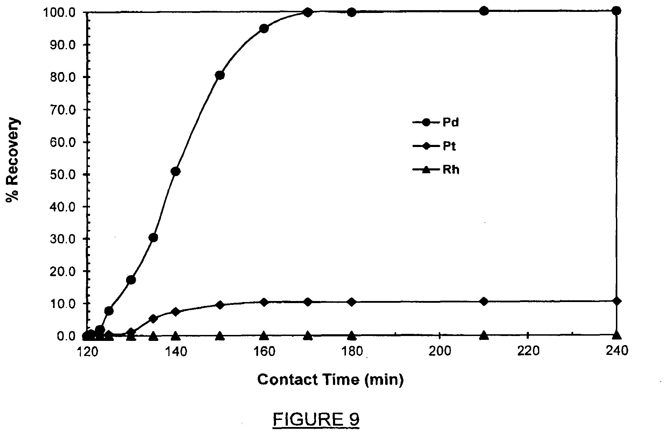

Experimental data pertaining to a single MBSX run is provided in Figures 8, 9, 10, 11 and 12. The concentration changes observed during the extraction of platinum, palladium and rhodium are presented in Figure 8 whilst the concentration changes observed during the recovery of platinum, palladium and rhodium are presented in Figure 9.

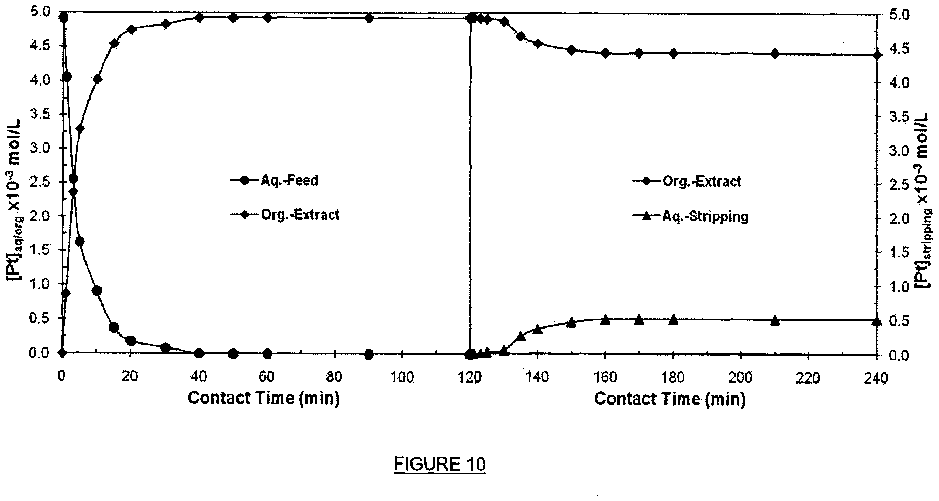

Figures 10, 11 and 12 present the concentration changes which occurred in the aqueous feed phase, the organic phase and in the aqueous stripping phase for platinum, palladium and rhodium, respectively.

An observation of the graphs illustrated in the Figures reveals that, during extraction, both Pt and Pd were extracted preferentially over Rh (Figure 8). After 120 minutes, approximately 99.9% of both Pt and Pd were extracted compared to 9% of Rh.

As shown in Figure 9, in the subsequent recovery from the organic phase into the stripping phase containing mainly Pd and Pt solutes, the Pd was selectively recovered (100%) while only 10% of the Pt was back-extracted. This implies that most of the Pt as well as the residual Rh was retained in the organic phase.

The retention of Pt in the organic phase is confirmed in Figure 10 where it is clearly observed that while the Pt concentration decreased significantly in the aqueous feed solution, the Pt concentration in the organic phase remained constant over 120 minutes with very little Pt back-extracted into the aqueous stripping phase during the 120 minutes (120 - 240 minutes) back-extraction.

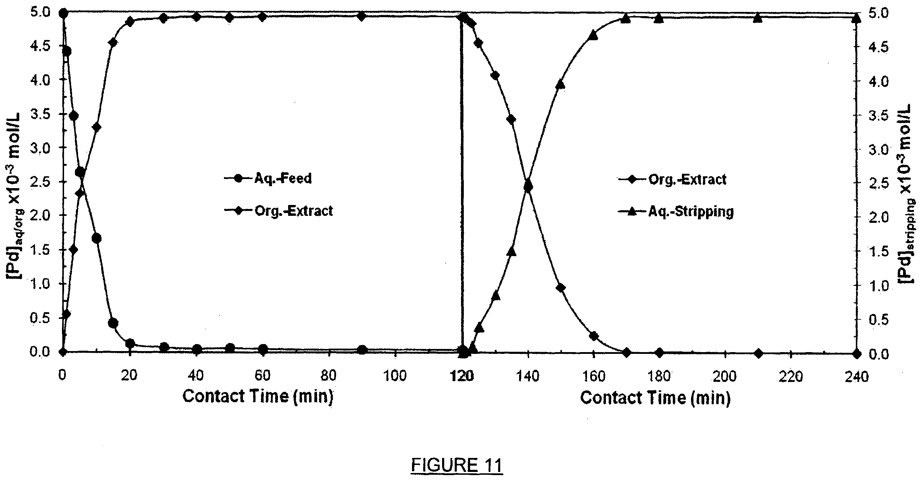

As is shown in Figure 9, Pd was preferentially back-extracted during the recovery. This is confirmed in Figure 11 showing that the Pd is nearly completely back-extracted from the organic phase to the aqueous stripping phase.

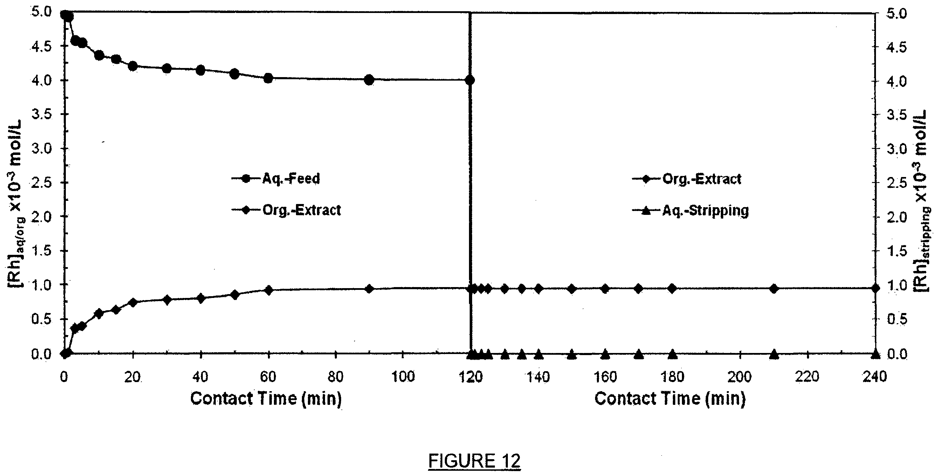

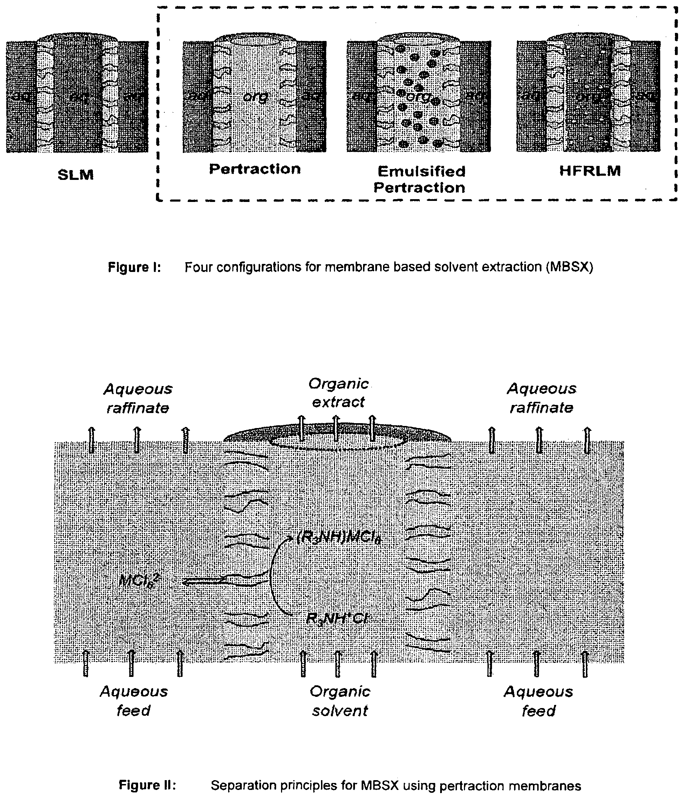

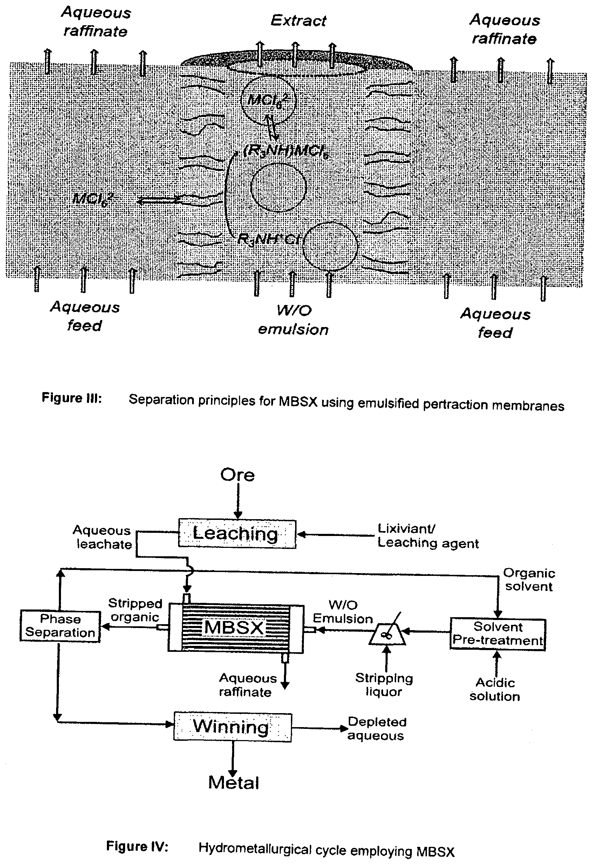

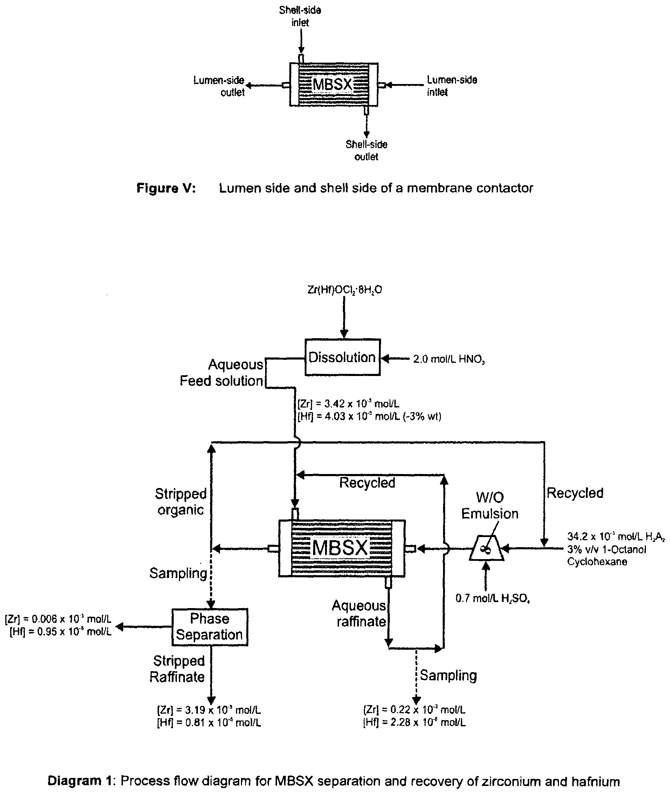

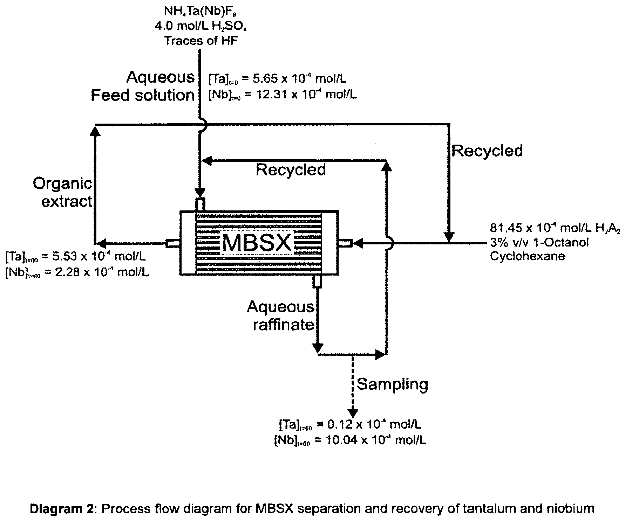

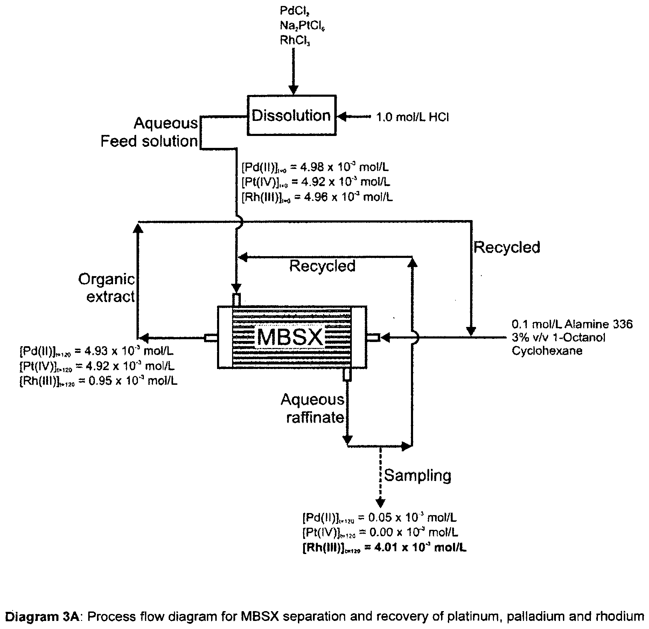

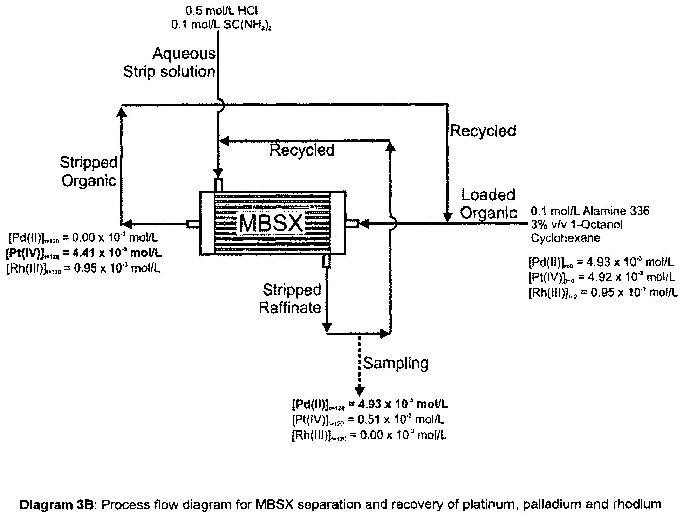

Similarly to the Pt, the Rh remaining in the organic phase was not back-extracted as confirmed in Figure 12 where no Rh was observed in the aqueous stripping phase after 120 minutes.

It will be apparent by the skilled artesian that numerous advantages are associated with the present invention.

Such advantages include the fact that technical problems such as emulsification and third phase formation, as would be common with the use of conventional solvent extraction using mixer-settlers, are not present in the case of membrane based solvent extraction performed in accordance with the present invention.

Furthermore, the Inventors have surprisingly found that the concentration of the metal solutes recovered from the method of the instant invention is markedly high resulting in a significant reduction in the amount of soluble metal and metal precipitate that is ordinarily lost in the raffinate. Accordingly, the overall process yields of the method of the instant invention are significantly high.

In addition hereto, as this invention is an example of both emulsified pertraction and pertraction separation, the method has the advantage of being a stable, industrially-applicable method (in contrast to supported liquid membrane (SLM) configurations), and only one pertraction membrane is required when emulsified pertraction is demonstrated thus contributing to the efficiency and economic desirability of the present method.

The present method also achieves a lower process foot-print in the fact that conventional mixer-settlers require large operating floor space owing to the size of the equipment employed making those processes very costly. Therefore, a desirable advantage associated with the method of the present invention resides in process intensification, thereby making the process more economically viable.

Whilst only certain embodiments or examples of the instant invention have been shown in the above description, it will be readily understood by any person skilled in the art that other modifications and/or variations of the invention are possible.

## Claims

1. A method for the selective separation and recovery of two or more metal solutes selected from the group consisting of hafnium, zirconium, niobium, tantalum, palladium, platinum, rhodium, ruthenium, osmium and iridium, from an acidic aqueous solution, the method including the steps of:
a) providing an acidic aqueous solution, the acidic aqueous solution including a source of at least two metal solutes wherein the at least two metal solutes are selected from the group consisting of hafnium, zirconium, niobium, tantalum, palladium, platinum, rhodium, ruthenium, osmium and iridium;
b) contacting an organic medium with an aqueous stripping solution to form a water- in-oil emulsion;
c) introducing the water-in-oil emulsion to a lumen side of a hollow fiber membrane contactor;
d) introducing the acidic aqueous solution to a shell side of the hollow fiber membrane contactor;
e) allowing one or more metal solutes to be transferred from the acidic aqueous solution to the water-in-oil emulsion;
f) recovering a first metal solute from the water-in-oil emulsion;
g) repeating any one or more of the steps described herein above for the recovery of a second and/or further metal solute; and
h) repeating any one or more of the said steps where the purity of the first, second and/or further metal solute is desired to be improved.

2. A method for the selective separation and recovery of two or more metal solutes selected from the group consisting of hafnium, zirconium, niobium, tantalum, palladium, platinum, rhodium, ruthenium, osmium and iridium, from an acidic aqueous solution, the method including the steps of:
a) providing an acidic aqueous solution, the acidic aqueous solution including a source of at least two metal solutes wherein the at least two metal solutes are selected from the group consisting of hafnium, zirconium, niobium, tantalum, palladium, platinum, rhodium, ruthenium, osmium and iridium;
b) introducing an organic medium to a lumen side of a first hollow fiber membrane contactor;
c) introducing the acidic aqueous solution to a shell side of the first hollow fiber membrane contactor;
d) allowing one or more metal solutes to be transferred from the acidic aqueous solution to the organic medium;
e) introducing the organic medium to a lumen side of a second hollow fiber membrane contactor;
f) introducing an aqueous stripping solution to a shell side of the second hollow fiber membrane contactor;
g) allowing one or more metal solutes to be transferred from the organic medium to the aqueous stripping solution;
h) recovering a first metal solute from the aqueous stripping solution;
i) repeating any one or more of the steps described herein above for the recovery of a second and/or further metal solute; and
j) repeating any one or more of the said steps where the purity of the first, second and/or further metal solute is desired to be improved.

3. The method according to claim 1 or claim 2, wherein the metal solutes are hafnium and zirconium.

4. The method according to claim 1 or claim 2, wherein the metal solutes are niobium and tantalum.

5. The method according to claim 1 or claim 2, wherein the at least two metal solutes are selected from the group consisting of palladium, platinum, rhodium, ruthenium, osmium and iridium.

6. The method according to any one of claims 1, 2 and 3, wherein the source of hafnium and zirconium metal solutes is selected from the group consisting of zirconium tetrachloride, hafnium tetrachloride, zirconyl oxychloride octahydrate, hafnium oxychloride octahydrate , hafnium tetrafluoride and zirconium tetrafluoride.

7. The method according to any one of claims 1, 2 and 4, wherein the source of niobium and tantalum metal solutes is selected from the group consisting of tantalum pentoxide, niobium pentoxide, tantalum pentachloride, niobium pentachloride, tantalumpentafluoride, , niobium pentafluoride, ammonium hexafluorotantalate, ammonium hexafluoroniobiate, potassium heptafluorotantalate and potassium heptafluoroniobiate..

8. The method according to any one of claims 1, 2 and 5, wherein the source of platinum, palladium, rhodium, ruthenium, osmium and iridium metal solutes is selected from the group consisting of sodium hexachloroplatinate, palladium chloride, rhodium chloride, ruthenium chloride, osmium trichloride, and iridium chloride, respectively.

9. The method according to any one of the preceding claims, wherein the acidic aqueous solution includes hydrochloric acid, nitric acid, sulphuric acid, hydrofluoric acid and hydrogen perchlorate.

10. The method according to any one of the preceding claims, wherein the organic medium includes a metal selective organic extractant and a hydrocarbon diluent.

11. The method according to claim 10, wherein the metal selective organic extractant is selected from the group comprising of tri-octylamine chloride, methyl tricapryl ammonium chloride, 2-hydroxy-5-nonylacetophenoneoxime, bis-2,4,4-trimethylpentyl, di-ethyl-hexyl phosphoric acid, 4,4,4-trifluoro-1-(2-thienyl)-1,3-butanedione, methyl isobutyl ketone , tributyl phosphate , butyl sulfoxide , and diisooctylphosphonic acid .

12. The method according to claim 10, wherein the hydrocarbon diluent is selected from the group consisting of cyclohexane, m-Xylene, toluene, and a combustible hydrocarbon liquid .

13. The method according to claim 10, wherein the organic medium includes a modifier in the form of an alcohol.

14. The method according to any one of claims 1 to 5, wherein the aqueous stripping solution is selected from the group consisting of a diluted hydrochloric acid solution, a diluted sulphuric acid solution, a hydrogen chloride / thiourea aqueous solution, an ammonia chloride/ammonium mixture solution, a sodium carbonate solution and an ammonium carbonate solution.

15. The method according to any one of claims 1 to 8, wherein a recycle step is included with any of the steps (a) to (h) (or (a) to (j), as the case may be for purposes of recycling the resulting stripped organic medium and/or the resulting metal depleted aqueous phase (raffinate) for re-use.

## Patentansprüche

1. Verfahren zum selektiven Abtrennen und Wiedergewinnen von zwei oder mehr gelösten Metallen aus der Gruppe bestehend aus Hafnium, Zirkonium, Niob, Tantal, Palladium, Platin, Rhodium, Ruthenium, Osmium und Iridium aus einer sauren wässrigen Lösung, wobei das Verfahren die Schritte aufweist:
a) Bereitstellen einer sauren wässrigen Lösung, wobei die saure wässrige Lösung eine Quelle von mindestens zwei gelösten Metallen enthält, wobei die mindestens zwei gelösten Metalle ausgewählt sind aus der Gruppe bestehend aus Hafnium, Zirkonium, Niob, Tantal, Palladium, Platin, Rhodium, Ruthenium Osmium und Iridium;
b) Inkontaktbringen eines organischen Mediums mit einer wässrigen Stripperlösung, um eine Wasser-in-ÖI-Emulsion zu bilden;
c) Zuführen der Wasser-in-ÖI-Emulsion zu einer Lumenseite eines Hohlfasermembrankontaktors;
d) Zuführen der sauren wässrigen Lösung zu einer Mantelseite des Hohlfasermembrankontaktors;
e) Ermöglichen, dass ein oder mehrere gelöste Metalle von der sauren wässrigen Lösung zur Wasser-in-ÖI-Emulsion übergehen;
f) Zurückgewinnen eines ersten gelösten Metalls aus der Wasser-in-Öl-Emulsion;
g) Wiederholen eines oder mehrerer der vorstehenden Schritte zum Wiedergewinnen eines zweiten und/oder eines weiteren gelösten Metalls; und
h) Wiederholen eines oder mehrerer der Schritte, wenn die Reinheit des ersten, zweiten und/oder weiteren gelösten Metalls verbessert werden soll.

2. Verfahren zum selektiven Abtrennen und Wiedergewinnen von zwei oder mehr gelösten Metallen aus der Gruppe bestehend aus Hafnium, Zirkonium, Niob, Tantal, Palladium, Platin, Rhodium, Ruthenium, Osmium und Iridium aus einer sauren wässrigen Lösung, wobei das Verfahren die Schritte aufweist:
a) Bereitstellen einer sauren wässrigen Lösung, wobei die saure wässrige Lösung eine Quelle von mindestens zwei gelösten Metallen enthält, wobei die mindestens zwei gelösten Metalle ausgewählt sind aus der Gruppe bestehend aus Hafnium, Zirkonium, Niob, Tantal, Palladium, Platin, Rhodium, Ruthenium Osmium und Iridium;
b) Zuführen eines organischen Mediums zu einer Lumenseite eines ersten Hohlfasermembrankontaktors;
c) Zuführen der sauren wässrigen Lösung zu einer Mantelseite des ersten Hohlfasermembrankontaktors;
d) Ermöglichen, dass ein oder mehrere gelöste Metalle von der sauren wässrigen Lösung zum organischen Medium übergehen;
e) Zuführen des organischen Mediums zu einer Lumenseite eines zweiten Hohlfasermembrankontaktors;
f) Zuführen einer wässrigen Stripperlösung zu einer Mantelseite des zweiten Hohlfasermembrankontaktors;
g) Ermöglichen, dass ein oder mehrere gelöste Metalle von dem organischen Medium zu der wässrigen Stripperlösung übergehen;
h) Wiedergewinnen eines ersten gelösten Metalls aus der wässrigen Stripperlösung;
i) Wiederholen eines oder mehrerer der vorstehend beschriebenen Schritte zum Zurückgewinnen eines zweiten und/oder eines weiteren gelösten Metalls; und
j) Wiederholen eines oder mehrerer der Schritte, wenn die Reinheit des ersten, zweiten und/oder weiteren gelösten Metalls verbessert werden soll.

3. Verfahren nach Anspruch 1 oder 2, wobei die gelösten Metalle Hafnium und Zirkonium sind.

4. Verfahren nach Anspruch 1 oder Anspruch 2, wobei die gelösten Metalle Niob und Tantal sind.

5. Verfahren nach Anspruch 1 oder 2, wobei die mindestens zwei gelösten Metalle ausgewählt sind aus der Gruppe bestehend aus Palladium, Platin, Rhodium, Ruthenium, Osmium und Iridium.

6. Verfahren nach einem der Ansprüche 1, 2 und 3, wobei die Quelle von gelöstem Hafnium- und Zirkoniummetall ausgewählt ist aus der Gruppe bestehend aus Zirkoniumtetrachlorid, Hafniumtetrachlorid, Zirkonyloxychloridoctahydrat, Hafniumoxychloridoctahydrat, Hafniumtetrafluorid und Zirkoniumtetrafluorid.

7. Verfahren nach einem der Ansprüche 1, 2 und 4, wobei die Quelle von gelöstem Niob- und Tantalmetall ausgewählt ist aus der Gruppe bestehend aus Tantalpentoxid, Niobpentoxid, Tantalpentachlorid, Niobpentachlorid, Tantalpentafluorid, Niobpentafluorid, Ammoniumhexafluortantalat, Ammoniumhexafluorniobiat, Kaliumheptafluorotantalat und Kaliumheptafluorniobat.

8. Verfahren nach einem der Ansprüche 1, 2 und 5, wobei die Quelle von gelöstem Platin-, Palladium-, Rhodium-, Ruthenium-, Osmium- und Iridiummetall ausgewählt ist aus der Gruppe bestehend aus Natriumhexachlorplatinat, Palladiumchlorid, Rhodiumchlorid, Rutheniumchlorid, Osmiumtrichlorid bzw. Iridiumchlorid.

9. Verfahren nach einem der vorhergehenden Ansprüche, wobei die saure wässrige Lösung Salzsäure, Salpetersäure, Schwefelsäure, Fluorwasserstoffsäure und Wasserstoffperchlorat enthält.

10. Verfahren nach einem der vorhergehenden Ansprüche, wobei das organische Medium ein metallselektives organisches Extraktionsmittel und ein Kohlenwasserstoffverdünnungsmittel enthält.

11. Verfahren nach Anspruch 10, wobei das metallselektive organische Extraktionsmittel ausgewählt ist aus der Gruppe bestehend aus Trioctylaminchlorid, Methyltricaprylammoniumchlorid, 2-Hydroxy-5-nonylacetophenonoxim, Bis-2,4,4-trimethylpentyl, Di-ethylhexylphosphorsäure, 4,4,4-Trifluor-1-(2-thienyl)-1,3-butandion, Methylisobutylketon, Tributylphosphat, Butylsulfoxid und Diisooctylphosphonsäure.

12. Verfahren nach Anspruch 10, wobei das Kohlenwasserstoffverdünnungsmittel ausgewählt ist aus der Gruppe bestehend aus Cyclohexan, m-Xylol, Toluol und einer brennbaren Kohlenwasserstoffflüssigkeit.

13. Verfahren nach Anspruch 10, wobei das organische Medium einen Modifikator in der Form eines Alkohols enthält.

14. Verfahren nach einem der Ansprüche 1 bis 5, wobei die wässrige Stripperlösung ausgewählt ist aus der Gruppe bestehend aus einer verdünnten Salzsäurelösung, einer verdünnten Schwefelsäurelösung, einer wässrigen Chlorwasserstoff/Thioharnstofflösung, einer Ammoniumchlorid/Ammonium-Mischlösung, einer Natriumcarbonatlösung und einer Ammoniumcarbonatlösung.

15. Verfahren nach einem der Ansprüche 1 bis 8, wobei in jedem der Schritte (a) bis (h) oder (a) bis (j) gegebenenfalls ein Recyclingschritt zum Recyceln des erhaltenen gestrippten organischen Mediums und/oder der erhaltenen, an Metall verarmten wässrigen Phase (Raffinat) zur Wiederverwendung vorgesehen ist.

## Revendications

1. Procédé de séparation sélective et de récupération de deux ou plus de deux solutés de métaux choisis dans le groupe constitué du hafnium, du zirconium, du niobium, du tantale, du palladium, du platine, du rhodium, du ruthénium, de l'osmium et de l'iridium, à partir d'une solution aqueuse acide, le procédé incluant les étapes :
a) de fourniture d'une solution aqueuse acide, la solution aqueuse acide incluant une source d'au moins deux solutés de métaux, où les au moins deux solutés de métaux sont choisis dans le groupe constitué du hafnium, du zirconium, du niobium, du tantale, du palladium, du platine, du rhodium, du ruthénium, de l'osmium et de l'iridium ;
b) de mise en contact d'un milieu organique avec une solution de décapage aqueuse pour former une émulsion eau dans huile ;
c) d'introduction de l'émulsion eau dans huile dans un côté lumière d'un contacteur à membrane en fibre creuse ;
d) d'introduction de la solution acide aqueuse dans un côté d'enveloppe du contacteur à membrane en fibre creuse ;
e) de permettre à un ou à plusieurs solutés de métaux d'être transférés de la solution acide aqueuse vers l'émulsion eau dans huile ;
f) de récupération d'un premier soluté de métal à partir de l'émulsion eau dans huile ;
g) de répétition de l'une quelconque ou de plusieurs des étapes décrites ci-dessus pour la récupération d'un deuxième et/ou d'un autre soluté de métal ; et
h) de répétition de l'une quelconque ou de plusieurs desdites étapes là où la pureté du premier, du deuxième et/ou d'un autre soluté de métal est désirée être améliorée.

2. Procédé de séparation sélective et de récupération de deux ou plus de deux solutés de métaux à partir du groupe constitué du hafnium, du zirconium, du niobium, du tantale, du palladium, du platine, du rhodium, du ruthénium, de l'osmium et de l'iridium, à partir d'une solution acide aqueuse, le procédé incluant les étapes :
a) de fourniture d'une solution aqueuse acide, la solution aqueuse acide incluant une source d'au moins deux solutés de métaux, où les au moins deux solutés de métaux sont choisis dans le groupe constitué du hafnium, du zirconium, du niobium, du tantale, du palladium, du platine, du rhodium, du ruthénium, de l'osmium et de l'iridium ;
b) d'introduction d'un milieu organique au niveau d'un côté lumière d'un premier contacteur à membrane en fibre creuse ;
c) d'introduction de la solution acide aqueuse au niveau d'un côté enveloppe du contacteur à membrane en fibre creuse ;
d) de permettre à un ou à plusieurs solutés de métaux d'être transférés de la solution acide aqueuse vers le milieu organique ;
e) d'introduction du milieu organique au niveau d'un côté lumière d'un second contacteur à membrane en fibre creuse ;
f) d'introduction d'une solution de décapage aqueuse au niveau d'un côté enveloppe du second contacteur à membrane en fibre creuse ;
g) de permettre à un ou à plusieurs solutés de métaux d'être transférés du milieu organique vers la solution de décapage aqueuse ;
h) de récupération d'un premier soluté de métal à partir de la solution de décapage aqueuse ;
i) de répétition de l'une quelconque ou de plusieurs des étapes décrites ci-dessus pour la récupération d'un deuxième et/ou d'un autre soluté de métal ; et
j) de répétition de l'une quelconque ou de plusieurs desdites étapes là où la pureté du premier, du deuxième et/ou d'un autre soluté de métal est désirée être améliorée.

3. Procédé selon la revendication 1 ou la revendication 2, dans lequel les solutés de métaux sont du hafnium et du zirconium.

4. Procédé selon la revendication 1 ou la revendication 2, dans lequel les solutés de métaux sont du niobium et du tantale.

5. Procédé selon la revendication 1 ou la revendication 2, dans lequel les au moins deux solutés de métaux sont choisis dans le groupe constitué du palladium, du platine, du rhodium, du ruthénium, de l'osmium et de l'iridium.

6. Procédé selon l'une quelconque des revendications 1, 2 et 3, dans lequel la source des solutés métalliques de hafnium et de zirconium est choisie dans le groupe constitué du tétrachlorure de zirconium, du tétrachlorure de hafnium, de l'oxychlorure de zirconyle octahydraté, de l'oxychlorure de hafnium octahydraté, du tétrafluorure de hafnium et du tétrafluorure de zirconium.

7. Procédé selon l'une quelconque des revendications 1, 2 et 4, dans lequel la source des solutés métalliques de niobium et de tantale est choisie dans le groupe constitué du pentoxyde de tantale, du pentoxyde de niobium, du penta chlorure de tantale, du penta chlorure de niobium, du penta fluorure de tantale, du penta fluorure de niobium, de l'hexafluoro tantalate d'ammonium, de l'hexafluoro niobiate d'ammonium, d'heptafluoro tantalate de potassium et d'heptafluoro niobiate de potassium.

8. Procédé selon l'une quelconque des revendications 1, 2 et 5, dans lequel la source des solutés métalliques de platine, de palladium, de rhodium, de ruthénium, d'osmium et d'iridium est choisie dans le groupe constitué de l'hexachloro platinate de sodium, du chlorure de palladium, du chlorure de rhodium, du chlorure de ruthénium, du trichlorure d'osmium et du chlorure d'iridium, respectivement.

9. Procédé selon l'une quelconque des revendications précédentes, dans lequel la solution acide aqueuse inclut de l'acide chlorhydrique, de l'acide nitrique, de l'acide sulfurique, de l'acide fluorhydrique et du perchlorate d'hydrogène.

10. Procédé selon l'une quelconque des revendications précédentes, dans lequel le milieu organique inclut un produit organique d'extraction sélective du métal et un diluant hydrocarboné.

11. Procédé selon la revendication 10, dans lequel le produit organique d'extraction sélective du métal est choisi dans le groupe constitué du chlorure de tri-octylamine, du méthyl tricapryl chlorure d'ammonium, du 2-hydroxy-5-nonyl acétophénone oxime, du bis-2,4,4-triméthyl pentyl, l'acide di-éthyl-hexyl phosphorique, de la 4,4,4-trifluoro-1-(2-thiényl)-1,3-butane dione, de la méthyl isobutyl cétone, du phosphate de tributyle, du butyl sulfoxyde et de l'acide di iso octyl phosphonique.

12. Procédé selon la revendication 10, dans lequel le diluant hydrocarboné est choisi dans le groupe constitué du cyclohexane, du m-xylène, du toluène et d'un hydrocarbure combustible liquide.

13. Procédé selon la revendication 10, dans lequel le milieu organique inclut un agent de modification dans la forme d'un alcool.

14. Procédé selon l'une quelconque des revendications 1 à 5, dans lequel la solution de décapage aqueuse est choisie dans le groupe constitué d'une solution d'acide chlorhydrique diluée, d'une solution d'acide sulfurique diluée, d'une solution aqueuse d'acide chlorhydrique / thio-urée, d'une solution d'un mélange d'ammoniac / chlorure d'ammonium, d'une solution de carbonate de sodium et d'une solution de carbonate d'ammonium.

15. Procédé selon l'une quelconque des revendications 1 à 8, dans lequel une étape de recyclage est incluse avec l'une quelconque des étapes (a) à (h), ou (a) à (j), si le cas se présente, à des fins de recyclage du milieu organique de décapage et/ou de la phase aqueuse appauvrie en métal résultante (raffinat) pour une réutilisation.
